(19) Europäisches Patentamt
European Patent Office
Office européen des brevets

(11) EP 4 763 651 A1

(12) DEMANDE DE BREVET EUROPEEN

(43) Date de publication:
24.06.2026 Bulletin 2026/26

(21) Numéro de dépôt: 25222426.6

(22) Date de dépôt: 11.12.2025

(51) Classification Internationale des Brevets (IPC):
*B60W 40/08* (2012.01)    *B60W 50/14* (2020.01)

(52) Classification Coopérative des Brevets (CPC):
**B60W 40/08; B60W 50/14;** B60W 2040/0872;
B60W 2050/143; B60W 2540/22; B60W 2540/225;
B60W 2540/229; B60Y 2300/26

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **18.12.2024 FR 2414453**

(71) Demandeur: AMPERE s.a.s.
**92100 Boulougne-Billancourt (FR)**

(72) Inventeurs:
• **BASILIO, Numa**
**78084 Guyancourt (FR)**
• **BRELAUD, Séverine**
**78084 Guyancourt (FR)**
• **GANDREZ, Clara**
**78084 Guyancourt (FR)**
• **KHALIL, Philippe**
**78084 Guyancourt (FR)**

(74) Mandataire: **Renault Group**
**1, avenue du Golf**
**FR TCR AVA 4 4C**
**78084 Guyancourt Cedex (FR)**

(54) **SYSTÈME ET PROCÉDÉ DE STIMULATION CONTEXTUALISÉE DE L ATTENTION D'UN CONDUCTEUR DE VÉHICULE**

(57) L'invention concerne un système de stimulation contextualisée (1) de l'attention d'un conducteur de véhicule, apte à :
- estimer un niveau (Nv) d'état de vagabondage de la pensée du conducteur,
- modéliser l'environnement de conduite et donner son niveau de complexité (D),
- détecter un ou plusieurs risques (Rj) liés à l'environnement de conduite,
- fournir un niveau de risque global (C) lié à un manque de vigilance du conducteur en fonction des risques détectés et d'un champ d'exploration visuelle du conducteur,
- alerter le conducteur de son vagabondage de la pensée lorsque le niveau (Nv) estimé de vagabondage de la pensée et le niveau de complexité (D) sont supérieurs à des niveaux de prédéterminés, ou bien pour alerter le conducteur d'un risque lié à un manque de vigilance lorsque le niveau de risque global (C) est supérieur à un niveau de risque prédéterminé.

[Fig. 1]

## Description

La présente invention se rapporte au domaine de l'industrie automobile, et concerne plus précisément un système et un procédé de stimulation contextualisée de l'attention d'un conducteur de véhicule, c'est-à-dire que la stimulation exercée sur le conducteur par une interface homme-machine est adaptée à un contexte de conduite.

Un pourcentage substantiel des accidents de la circulation sont dus à des états d'hypovigilance, de distraction ou d'inattention, à tel point que les nouvelles règles de sécurité européennes GSR 2 (pour l'anglais « General Safety Regulations » 2), ou les organismes de sécurité routière tels que l'EuroNCAP (pour l'anglais « European New Car Assessment Program »), imposent aux nouveaux véhicules d'avoir des systèmes de détection et d'alerte de tels états.

Il existe en fait de nombreux types ou causes de distraction ou d'inattention, liés à l'écoute de musique, d'un passager, à la manipulation d'objets dans l'habitacle, à la consultation d'un écran, cette consultation étant liée à la conduite ou non, ... Ces types ou causes de distraction peuvent être analysés par des capteurs présents dans le véhicule, qui peuvent détecter notamment les mouvements du conducteur.

Un autre type de distraction, beaucoup moins facilement décelable, est le vagabondage de la pensée, défini notamment dans la littérature scientifique comme un déplacement du contenu des pensées loin de la tâche de conduite, vers des pensées et des sentiments auto-générés. Le vagabondage de la pensée est donc une forme de distraction endogène ou interne provenant de préoccupations ou pensées du conducteur. Son apparition est facilitée par un environnement routier monotone, un trajet familier, ou bien une tâche routière ne nécessitant pas d'attention soutenue, libérant ainsi de la ressource attentionnelle pour penser à autre chose. Elle est également favorisée par des émotions négatives, notamment par la tristesse ou la dépression.

Le vagabondage de la pensée est donc un type de distraction purement cognitif, non lié à une distraction physique, visuelle et/ou audio, et ne peut donc pas être détectée uniquement en observant par exemple la direction du regard du conducteur.

Or, lorsque le conducteur est dans un tel état, il voit sans regarder, diminue sa distance avec les autres véhicules, conduit plus vite, réagit plus lentement, et a du mal à maintenir une trajectoire rectiligne, d'où un nombre conséquent d'accidents liés à ce type de distraction, qui peut occuper entre un tiers et deux tiers du temps de conduite du conducteur.

Il est donc d'une part difficile de détecter un état de vagabondage de la pensée chez un conducteur, et d'autre part inconstructif d'avertir trop fréquemment le conducteur de cet état quand aucun risque imminent n'est présent, étant donné que de tels avertissements n'auraient plus d'effet sur lui et pourraient rendre le conducteur insensible à d'autres alertes plus prioritaires.

Le conducteur est en effet soumis à de nombreux stimuli liés aux systèmes avancés d'aide à la conduite, tels que des indications de navigation ou des alertes sur des risques liés à l'environnement de conduite. L'ajout à ces alertes, de celles prévues pour signaler au conducteur qu'il est dans un état de vagabondage de la pensée, rendrait toutes ces alertes moins efficaces.

La présente invention vise à remédier au moins en partie aux inconvénients précités en fournissant un procédé et un système de stimulation contextualisée de l'attention d'un conducteur de véhicule, qui permettent de prévenir des accidents en rendant efficaces les alertes notifiant le conducteur d'un état de vagabondage de la pensée ou d'un risque lié à l'environnement de conduite.

La présente invention vise à remédier au moins en partie aux inconvénients précités en fournissant un système de stimulation contextualisée de l'attention d'un conducteur de véhicule, comportant :

- au moins une interface homme-machine,
- un module d'estimation d'un niveau de vagabondage de la pensée du conducteur,
- un module de modélisation d'un environnement de conduite du véhicule, apte à fournir un niveau de complexité de l'environnement de conduite modélisé,
- un module de détection de risque lié à l'environnement de conduite modélisé, apte à identifier un ou plusieurs risques liés à l'environnement de conduite,
- des moyens d'analyse aptes à déterminer un champ d'exploration visuelle du conducteur, et à fournir un niveau de risque global lié à la compréhension par le conducteur de l'environnement de conduite, à partir du ou des risques identifiés par le module de détection et du champ d'exploration visuelle déterminé,

le système de stimulation contextualisée étant caractérisé en ce qu'il est configuré pour alerter le conducteur qu'il est dans un état élevé de vagabondage de la pensée, en utilisant l'au moins une interface homme-machine, lorsque le niveau estimé de vagabondage de la pensée du conducteur est supérieur à un seuil de vagabondage prédéterminé et lorsque le niveau de complexité de l'environnement de conduite est supérieur à un niveau de complexité prédéterminé, et pour alerter le conducteur d'un risque lié à un manque de vigilance, en utilisant l'au moins une interface homme-machine, lorsque le niveau de risque global lié à la compréhension par le conducteur de l'environnement de conduite est supérieur à un niveau de risque prédéterminé.

Grâce à l'invention, l'alerte au conducteur l'informant de ce qu'il est dans un état élevé de vagabondage de la pensée ne sera déclenchée que lorsque le système de stimulation contextualisée selon l'invention détecte l'atteinte d'un certain niveau de vagabondage de la pensée du conducteur et lorsque l'environnement de conduite requiert un minimum d'attention. Le niveau de vagabondage de la pensée du conducteur est bien sûr d'autant plus grand que le conducteur est perdu dans ses pensées.

De plus, dans un mode de réalisation de l'invention, l'alerte au conducteur de son état élevé de vagabondage de la pensée n'est pas déclenchée lorsque les conditions de déclenchement d'une alerte informant le conducteur d'un risque lié à un manque de vigilance sont réunies, afin que le conducteur ne soit pas distrait par une alerte au conducteur l'informant qu'il est dans un état élevé de vagabondage de la pensée, au détriment de l'alerte informant le conducteur d'un risque lié à son manque de vigilance, et afin d'augmenter ainsi l'acceptabilité par le conducteur du système de stimulation contextualisée selon l'invention. L'alerte au conducteur d'un état élevé de vagabondage de la pensée n'est en effet déclenchable par le système de stimulation contextualisée selon l'invention que lorsque le niveau de risque global lié à la compréhension par le conducteur de l'environnement de conduite est inférieur au niveau de risque prédéterminé.

Autrement dit, le système de stimulation contextualisée de l'attention selon l'invention comporte des moyens d'inhibition de l'alerte liée à un état élevé de vagabondage de la pensée du conducteur dès qu'une alerte d'un risque lié à un manque de vigilance est déclenchée par le système de stimulation contextualisée.

De plus, le système de stimulation contextualisée de l'attention selon l'invention n'envoie pas le même type de signal à l'au moins une interface homme-machine, suivant le type d'alerte au conducteur qu'elle déclenche. En effet, l'au moins une interface homme-machine alerte le conducteur d'un état élevé de vagabondage de la pensée différemment de la façon dont elle alerte le conducteur d'un risque lié à un manque de vigilance. Eventuellement, l'alerte d'un état élevé de vagabondage de la pensée utilise une première interface homme-machine, distincte d'une deuxième interface homme-machine utilisée pour alerter le conducteur d'un risque lié à un manque de vigilance.

L'alerte au conducteur d'un état élevé de vagabondage de la pensée consiste par exemple en un clignotement d'une diode, pouvant être plus ou moins rapide ou intense, ou en l'affichage d'un avatar sur un écran, qui s'adresse au conducteur de façon sonore grâce à un haut-parleur.

L'alerte au conducteur d'un risque lié à un manque de vigilance est plus perceptible et peut comprendre par exemple un bip sonore plus ou moins intense, des vibrations sur le volant, un affichage d'un triangle clignotant, etc. Bien sûr le type d'interaction pour l'une ou l'autre de ces alertes n'est cependant pas limitée, l'alerte au conducteur d'un état élevé de vagabondage de la pensée pouvant également utiliser un retour haptique au volant ou un signal sonore.

Le système de stimulation contextualisée de l'attention selon l'invention fait par exemple partie d'un système avancé d'aide à la conduite du véhicule, qui est de plus configuré pour agir sur des actionneurs, par exemple pour activer un dispositif de freinage d'urgence lorsqu'un risque imminent tel que la traversée d'un piéton est détecté, alors que le conducteur n'a pas conscience de ce risque.

Par ailleurs, dans un mode de réalisation de l'invention, les moyens d'analyse aptes à fournir un niveau de risque global lié à la compréhension par le conducteur de l'environnement de conduite, sont configurés pour prendre en compte le niveau de vagabondage de la pensée estimé par le module d'estimation. Le niveau de risque global lié à la compréhension par le conducteur de l'environnement de conduite est par exemple d'abord évalué en fonction d'une action de conduite ou d'un comportement du conducteur, cohérents avec le ou les risques détectés par le module de détection, puis est adapté en fonction du niveau estimé de vagabondage de la pensée du conducteur.

Notamment, les moyens d'analyse sont aptes à déterminer un champ d'exploration visuelle en fonction du regard du conducteur, et à ajuster le champ d'exploration visuelle en fonction du niveau estimé de vagabondage de la pensée pour calculer le niveau de risque global lié à la compréhension par le conducteur de l'environnement de conduite.

Le champ d'exploration visuelle est par exemple déterminé sous la forme d'un cône de vision dont le sommet part des yeux du conducteur et dont un axe central est dirigé selon la direction du regard du conducteur, ce cône ayant une base par exemple elliptique, le cône étant moins étendu verticalement que latéralement c'est-à-dire vers les côtés de la route. Le grand côté de l'ellipse formant la base du cône de vision est par exemple ensuite diminué ou augmenté par les moyens d'analyse, selon que le niveau de vagabondage de la pensée du conducteur, estimé par le module d'estimation, augmente ou respectivement diminue, par rapport à une valeur précédente de niveau estimé de vagabondage de la pensée.

Eventuellement, lorsque le module d'estimation fournit un niveau de fiabilité du niveau estimé de vagabondage de la pensée, calculé par exemple en fonction de la précision de capteurs utilisés pour cette estimation, et lorsque ce niveau de fiabilité est inférieur à un seuil prédéterminé de fiabilité, alors les moyens d'analyse fournissent un niveau de risque global lié à la compréhension par le conducteur de l'environnement de conduite indépendamment du niveau estimé de vagabondage de la pensée. De plus, les alertes du conducteur d'un état élevé de vagabondage de la pensée sont par exemple inhibées lorsque ce niveau de fiabilité est inférieur au seuil prédéterminé de fiabilité.

L'invention concerne aussi un procédé de stimulation contextualisée de l'attention d'un conducteur de véhicule, utilisant au moins une interface homme-machine, un module d'estimation d'un niveau de vagabondage de la pensée du conducteur, un module de modélisation d'un environnement de conduite du véhicule, apte à fournir un niveau de complexité de l'environnement de conduite modélisé, un module de détection de risque lié à l'environnement de conduite modélisé, apte à identifier un ou plusieurs risques liés à l'environnement de conduite, des moyens d'analyse aptes à déterminer un champ d'exploration visuelle du conducteur et à fournir un niveau de risque global lié à la compréhension par le conducteur de l'environnement de conduite à partir du ou des risques identifiés par le module de détection et du champ d'exploration visuelle déterminé,

le procédé de stimulation contextualisée étant caractérisé en ce qu'il comporte des étapes de :

- modélisation de l'environnement de conduite par le module de modélisation, et fourniture du niveau de complexité de l'environnement de conduite modélisé par le module de modélisation,
- estimation du niveau de vagabondage de la pensée par le module d'estimation,
- identification d'un ou plusieurs risques liés à l'environnement de conduite modélisé par le module de détection,
- détermination par les moyens d'analyse du champ d'exploration visuelle du conducteur et fourniture d'un niveau de risque global lié à la compréhension par le conducteur de l'environnement de conduite, à partir du ou des risques identifiés par le module de détection et du champ d'exploration visuelle déterminé, par les moyens d'analyse,
- alerte au conducteur d'un état élevé de vagabondage de la pensée, en utilisant l'au moins une interface homme-machine, lorsque le niveau estimé de vagabondage de la pensée est supérieur à un seuil de vagabondage prédéterminé et lorsque le niveau de complexité de l'environnement de conduite est supérieur à un niveau de complexité prédéterminé, ou
- alerte au conducteur d'un risque lié à un manque de vigilance, en utilisant l'au moins une interface homme-machine, lorsque le niveau de risque global lié à la compréhension par le conducteur de l'environnement de conduite est supérieur à un niveau de risque prédéterminé.

Le procédé de stimulation contextualisée de l'attention d'un conducteur de véhicule selon l'invention comporte des avantages analogues à ceux du système de stimulation contextualisée de l'attention d'un conducteur de véhicule selon l'invention. Il est implémenté sous forme logicielle et/ou matérielle dans le système de stimulation contextualisée de l'attention d'un conducteur de véhicule selon l'invention.

Dans un mode de réalisation du procédé de stimulation contextualisée selon l'invention, l'étape d'alerte au conducteur relative à un état élevé de vagabondage de la pensée est déclenchée de manière conditionnée à un historique d'alertes précédemment effectuées.

Par exemple, lorsque le niveau estimé de vagabondage de la pensée est supérieur au seuil de vagabondage prédéterminé et lorsque le niveau de complexité de l'environnement de conduite est inférieur au niveau de complexité prédéterminé, l'alerte au conducteur d'un état élevé de vagabondage de la pensée n'est déclenchée que lorsqu'une telle alerte n'avait pas déjà été faite au conducteur dans une itération précédente du procédé de stimulation contextualisée de l'attention, par exemple dans les trente dernières secondes, ou dans la minute précédente.

De plus, l'alerte au conducteur d'un état élevé de vagabondage de la pensée est adaptée au niveau estimé de vagabondage de la pensée, et/ou à un historique d'alertes précédentes d'un état élevé de vagabondage de la pensée, et/ou au niveau de complexité de l'environnement de conduite. L'alerte au conducteur d'un état élevé de vagabondage de la pensée est par exemple d'autant plus intrusive que le niveau estimé de vagabondage de la pensée est élevé, et/ou que des alertes précédentes d'un état élevé de vagabondage de la pensée sont rapprochées dans le temps, et/ou que le niveau de complexité de l'environnement de conduite est élevé.

D'autre part, le procédé de stimulation contextualisée de l'attention selon l'invention tient compte de la réaction du conducteur aux alertes déclenchées. Par exemple, l'alerte au conducteur d'un état élevé de vagabondage de la pensée ou d'un risque lié à un manque de vigilance, est suivie d'une étape de vérification d'une réaction du conducteur à l'alerte, et d'une étape d'intensification de l'alerte en l'absence de réaction du conducteur, ou d'inhibition de l'alerte lorsqu'une réaction du conducteur est confirmée.

En variante ou en plus de cette étape de vérification d'une réaction, l'étape d'alerte est suivie d'une nouvelle étape d'estimation d'un niveau de vagabondage de la pensée du conducteur, déclenchant une nouvelle étape de détermination d'un champ d'exploration visuelle du conducteur et de fourniture d'un niveau de risque global lié à la compréhension par le conducteur de l'environnement de conduite, en fonction notamment du champ d'exploration visuelle nouvellement déterminé, de sorte à inhiber l'alerte lorsque le niveau de vagabondage de la pensée nouvellement estimé est inférieur au seuil de vagabondage prédéterminé ou lorsque le niveau de risque global nouvellement fourni est inférieur au niveau de risque prédéterminé.

Par ailleurs, l'étape d'estimation d'un niveau de vagabondage de la pensée par le module d'estimation comporte d'une part une sous-étape de réception de données représentatives de mesures physiologiques du conducteur, de données représentatives de commandes du conducteur, et d'au moins une donnée représentative d'un environnement de conduite, et d'autre part une sous-étape de quantification d'un état de vagabondage de la pensée du conducteur en fonction des données reçues.

La sous-étape de quantification comporte par exemple une mesure de distances entre un vecteur multidimensionnel représentatif des données reçues et des groupes de vecteurs multidimensionnels de référence associés à des niveaux de vagabondage de la pensée, le niveau de vagabondage de la pensée estimé étant celui du groupe de vecteurs multidimensionnels de référence le plus proche du vecteur multidimensionnel représentatif des données reçues. Les groupes de vecteurs multidimensionnels de référence sont formés par exemple en utilisant l'algorithme des K-moyennes (en anglais « K-mean algorithm ») sur des données d'apprentissage. Cependant en variante, la sous-étape de quantification utilise par exemple un réseau de neurones préalablement soumis à une phase d'apprentissage supervisée.

Chaque groupe de vecteurs multidimensionnels de référence est associé à un seul niveau de vagabondage de la pensée, de sorte que l'ensemble des groupes de vecteurs multidimensionnels de référence soit représentatif des différents niveaux d'une échelle de niveaux de vagabondage de la pensée.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :

[Fig.1] représente un système de stimulation contextualisée de l'attention d'un conducteur de véhicule selon l'invention, dans un mode de réalisation de l'invention,

[Fig.2] représente des étapes d'un procédé selon l'invention, de stimulation contextualisée de l'attention du conducteur du véhicule embarquant le système de stimulation contextualisée de la [Fig.1], dans ce mode de réalisation de l'invention, et

[Fig.3] est un tableau représentant des alertes d'un état élevé de vagabondage de la pensée, faites au conducteur dans le mode de réalisation des figures 1 et 2, en fonction notamment d'un niveau estimé de vagabondage de la pensée du conducteur.

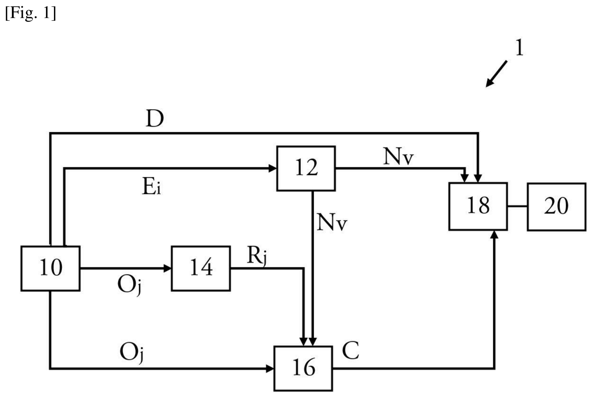

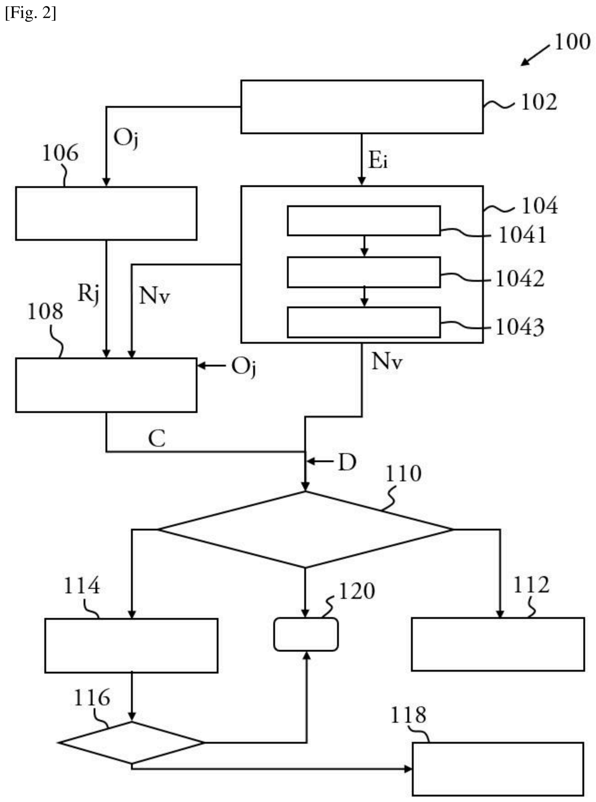

Selon un mode de réalisation représenté en [Fig.1], un système de stimulation contextualisée 1 de l'attention d'un conducteur d'un véhicule selon l'invention est embarqué dans ce véhicule, et met en œuvre de manière logicielle et matérielle un procédé de stimulation contextualisée 100 (référencé [Fig.2]) selon l'invention, de l'attention du conducteur.

Le système de stimulation contextualisée 1 fait par exemple lui-même partie d'un système avancé d'aide à la conduite (aussi appelé ADAS pour l'anglais « Advanced Driver Assistance System »). Le système de stimulation contextualisée 1 comporte ici un module de modélisation 10 d'un environnement de conduite, pouvant être utilisé également pour d'autres fonctions avancées d'aide à la conduite.

Le module de modélisation 10 d'un environnement de conduite utilise des données issues des différentes caméras, radars et LiDARs (d'après l'anglais « Light Detection And Ranging ») du véhicule, pour identifier des objets dans l'environnement immédiat du véhicule, c'est-à-dire dans un rayon d'environ 200 mètres autour du véhicule, ces objets étant la route, les tracés et panneaux routiers, les obstacles sur la route, les autres véhicules, les piétons, cyclistes, etc. Il réalise ainsi ce qu'on appelle un « world model » en langue anglaise, c'est-à-dire une représentation de l'environnement du véhicule, utilisée par les divers systèmes d'aide à la conduite pour prendre des décisions et fournir des avertissements au conducteur.

Le module de modélisation 10 est implémenté de manière logicielle dans un calculateur, et est apte à délivrer, dans ce mode de réalisation, à d'autres modules logiciels implémentés dans le même calculateur ou dans d'autres calculateurs :

- un environnement de conduite par exemple codé sous forme d'objets {Ei} avec i variant de 1 au nombre d'objets identifiés par le module de modélisation 10 ;
- une sélection d'objets constituant de potentiels obstacles {Oj} pour le véhicule, avec j variant de 1 au nombre de potentiels obstacles {Oj}; et
- un niveau de complexité D de l'environnement de conduite, dépendant par exemple de la configuration de la route sur laquelle roule le véhicule, telle que sa sinuosité, et du nombre de potentiels obstacles {Oj} tels qu'identifiés par le module de modélisation 10. Par exemple le niveau de complexité D est minimal lorsque le véhicule évolue en ligne droite sans obstacles sur la route, et est maximal en milieu urbain avec beaucoup de trafic et de passages piétons sur la route. Autrement dit le niveau de complexité D est d'autant plus important que la route est encombrée ou présente des obstacles potentiels, c'est-à-dire qu'elle nécessite une attention soutenue du conducteur. Le niveau de complexité D est par exemple d'autant plus bas que le premier potentiel obstacle sur la route est éloigné du véhicule.

Le système de stimulation contextualisée 1 comporte de plus un module d'estimation 12 d'un niveau de vagabondage de la pensée du conducteur, apte à recevoir au moins une donnée de l'environnement de conduite {Ei} modélisé par le module de modélisation 10, telle que par exemple un type de route sur laquelle circule le véhicule.

Le module d'estimation 12 du niveau de vagabondage de la pensée du conducteur est implémenté dans un calculateur, et est apte à recevoir, en plus de la ou des données d'environnement de conduite, des données issues d'un bus informatique du véhicule, tel qu'un bus CAN (d'après l'anglais « Controller Area Network »), et des données issues de capteurs physiologiques, tels qu'un oculomètre et une ceinture cardiaque. Le module d'estimation 12 est apte à fournir un niveau Nv de vagabondage de la pensée du conducteur, en fonction des données reçues d'environnement de conduite, d'état physiologique du conducteur et des commandes effectuées par le conducteur, ces commandes étant identifiées par une lecture du bus informatique.

Pour cela, le calculateur implémentant le module d'estimation 12 comporte en mémoire, des données collectées lors d'une phase d'apprentissage, préalable à une estimation du niveau de vagabondage de la pensée du conducteur par le module d'estimation 12. Ces données ont été collectées sur différentes périodes de conduite, représentatives de différents contextes de de conduite.

Lors de cette phase d'apprentissage, un sujet conducteur, pouvant être le conducteur du véhicule ou un autre conducteur d'un autre véhicule, effectue des trajets sur divers types de routes présentant différentes caractéristiques, telles que par exemple des autoroutes, des rues en ville, des routes en ligne droite ou sinueuses, avec beaucoup ou peu de trafic, de piétons ou d'autres obstacles, et avec différentes conditions météorologiques. Ces différentes caractéristiques du trajet, que sont le type de route, son encombrement et les conditions météorologiques, forment un contexte de conduite. Chaque période de conduite est associée à un contexte de conduite.

Sur chaque période de conduite, des mesures physiologiques sont effectuées sur le sujet conducteur en utilisant un oculomètre et une ceinture cardiaque, de sorte à obtenir pour chaque période de conduite, une fréquence cardiaque, et des données oculaires et pupillométriques. Les données oculaires concernent le mouvement des yeux et comportent par exemple une durée de fixation du regard et un nombre de clignotements des paupières par minute, tandis que les données pupillométriques comportent par exemple un diamètre de la pupille du conducteur.

De plus, sur chaque période de conduite, des données sont prélevées sur le bus informatique du véhicule, telles que la vitesse du véhicule et la demande de couple moteur. Eventuellement, une distance inter-véhicules est également évaluée, cette distance étant représentative de la distance entre le véhicule du sujet conducteur et un véhicule roulant devant le véhicule du sujet conducteur.

Chaque période de conduite est associée à un niveau de vagabondage de la pensée du sujet conducteur, évaluée par le sujet conducteur lui-même, par une interrogation pendant cette période de conduite, par exemple par une interface homme-machine. Dans un mode de réalisation de l'invention, l'état de vagabondage de la pensée est quantifié sur une échelle de niveaux de 1 à 4, le niveau 1 correspondant à l'absence de vagabondage de la pensée, le niveau 2 à un léger état de vagabondage de la pensée, le niveau 3 à un état bien établi de vagabondage de la pensée, et le niveau 4 à un état intense de vagabondage de la pensée.

Pour chaque période de conduite, les données ainsi collectées pendant cette période de conduite sont ensuite assemblées dans un vecteur multidimensionnel dit de référence. Chaque vecteur multidimensionnel de référence comprend donc différentes valeurs représentatives de l'état de vigilance du conducteur, par exemple :

- des données physiologiques mesurées sur le conducteur, comme ses mouvements oculaires, son rythme cardiaque en battements par minute, son ouverture de pupille en millimètres, son rythme de clignotement de paupières en nombre de clignements par minute, son genre ou encore son âge,
- des variables provenant de l'environnement dans lequel le conducteur circule, comme la position des obstacles environnants ou des autres usagers, le type d'infrastructure, les conditions météorologiques, le type de route (le vagabondage de la pensée est bien plus présent sur autoroute qu'en ville), la distance (en mètres) gardée par le conducteur avec le véhicule qui le précède (qui a tendance à se réduire pendant un épisode de vagabondage de la pensée), l'état du trafic,
- des données provenant du bus informatique, telles que la vitesse du véhicule en mètres par seconde, la force d'appui sur la pédale de frein ou d'accélérateur, la demande de couple moteur en Newton mètres, ou encore l'angle au volant en degrés,
- l'historique des précédents déclenchements d'alerte sur une ou plusieurs interfaces homme-machine 20 (temps depuis le dernier déclenchement d'une alerte, type d'alerte, etc.)

Une fois les données collectées, la phase d'apprentissage comporte une classification des vecteurs multidimensionnels enregistrés pendant la collecte de données, cette classification utilisant un algorithme de regroupement, ici l'algorithme dit des K-moyennes, mais d'autres algorithmes de regroupement sont utilisables tels que CAH (pour Classification Ascendante Hiérarchique) ou DBSCAN (pour l'anglais « Density-Based Spatial Clustering of Applications with Noise »).

L'application de l'algorithme des K-moyennes permet de regrouper les vecteurs multidimensionnels de référence issus de la collecte de données d'apprentissage en K groupes.

Puis un niveau de vagabondage de la pensée est attribué à chaque groupe constitué par l'algorithme des K-moyennes, en fonction notamment des auto-évaluations effectuées par le ou les sujets conducteurs pendant les périodes de conduite associées aux vecteurs multidimensionnels de référence du groupe, et des contextes de conduite de ces périodes de conduite.

L'attribution d'un niveau de vagabondage de la pensée à chaque groupe dépend donc des auto-évaluations du ou des sujets conducteurs correspondant aux vecteurs multidimensionnels de référence de ce groupe, et des valeurs présentes dans ces vecteurs multidimensionnels de référence.

Une fois les groupes constitués et associés chacun à un niveau de vagabondage de la pensée, la phase d'apprentissage est terminée et les données associées aux différents groupes sont enregistrées dans une mémoire du calculateur implémentant le module d'estimation 12.

Comme cela sera expliqué en détail plus loin en relation avec le procédé de stimulation contextualisée 100 selon l'invention, le module d'estimation 12 est apte à estimer périodiquement un niveau Nv de vagabondage de la pensée du conducteur en temps réel, représentatif de l'état du conducteur sur une période de conduite courante. Chaque période de conduite dure par exemple trente secondes.

Pour cela, le module d'estimation 12 calcule une distance entre d'une part un vecteur multidimensionnel construit de la même façon que les vecteurs multidimensionnels de référence lors de la phase d'apprentissage, ce vecteur multidimensionnel étant représentatif de la période de conduite courante, et d'autre part chacun des groupes constitués lors de la phase d'apprentissage. Le niveau Nv estimé de vagabondage de la pensée du conducteur est alors égal au niveau de vagabondage de la pensée associé au groupe dont le vecteur multidimensionnel est le plus proche.

Le module d'estimation 12 enregistre de plus, dans ce mode de réalisation de l'invention, un historique des estimations qu'il a effectuées sur les périodes de conduite précédant la période de conduite courante. Le module d'estimation 12 est donc apte à fournir un niveau Nv estimé de vagabondage de la pensée du conducteur lors d'une période de conduite courante, mais aussi une durée d pendant laquelle le conducteur se trouve dans cet état et éventuellement un niveau de fiabilité du niveau Nv estimé, en fonction par exemple de la précision ou du bon fonctionnement des capteurs physiologiques, et plus généralement en fonction de la fiabilité des données reçues par le module d'estimation 12.

Le système de stimulation contextualisée 1 comporte, en plus du module de modélisation 10 et du module d'estimation 12, un module de détection 14 de risques, apte à recevoir notamment les potentiels obstacles {Oj} identifiés par le module de modélisation 12, et à identifier un ou plusieurs risques Rj liés à l'environnement de conduite. Chaque risque Rj est associé à un potentiel obstacle Oj, pouvant être par exemple un piéton proche du véhicule, un passage piéton masqué ou une chicane.

Plus précisément, le module de détection 14 de risque identifie des risques objectifs associés aux différents éléments de l'environnement de conduite en prédisant la trajectoire du véhicule. Les risques détectés sont par exemple relatifs aux zones cachées ou à une collision possible avec un potentiel obstacle Oj sur ou à proximité de la route. Les zones cachées correspondent à des zones d'intérêt telles que des passages piétons masqués en totalité ou partiellement par des véhicules ou des infrastructures. Le module de détection 14 de risque calcule alors la probabilité qu'un usager de la route tel qu'un piéton ou un cycliste surgisse d'une de ces zones cachées. Cette probabilité est importante par exemple pour un passage piéton masqué par un bus arrêté à proximité du passage piéton. Chaque risque Rj peut être associé à une probabilité de risque Rj d'autant plus élevée que le risque est important. Il s'agit par exemple d'une probabilité comprise entre 0 et 1, ou d'un entier naturel compris par exemple entre 0 et 10.

Le système de stimulation contextualisée 1 comporte de plus des moyens d'analyse 16 aptes à déterminer un champ d'exploration visuelle du conducteur, et à fournir un niveau de risque global C lié à la compréhension par le conducteur de l'environnement de conduite, à partir du ou des risques Rj identifiés par le module de détection 14 et du champ d'exploration visuelle du conducteur déterminé. Les moyens d'analyse 16 comportent par exemple une caméra fixée au pare-brise, et un module logiciel pouvant être intégré dans un calculateur implémentant par exemple le module de détection 14.

Les moyens d'analyse 16 sont aptes à recevoir notamment :

- les potentiels obstacles Oj, en provenance du module de modélisation 10,
- le niveau Nv estimé de vagabondage de la pensée,
- le ou les risques Rj identifiés, comportant par exemple chacun une probabilité de risque correspondante, et
- des mesures représentatives de l'attention visuelle du conducteur, pour fournir le niveau de risque global C lié à la compréhension par le conducteur de l'environnement de conduite. Pour cela, l'attention visuelle du conducteur est représentée par un cône de vision partant de ses yeux et dont un axe central est dirigé selon la direction du regard du conducteur, ce cône de vision ayant une base elliptique. Ce cône de vision permet de déterminer les zones de vision centrale et de vision périphérique du conducteur, et de la confronter avec les potentiels obstacles Oj correspondant aux risques Rj, susceptibles d'être pris en compte par le conducteur. Les mouvements du regard ou de la tête du conducteur permettent de conforter ou d'infirmer au moins en partie cette prise en compte.

Dans un mode de réalisation particulier de l'invention, la taille du cône de vision du conducteur est adaptée selon le niveau Nv estimé de vagabondage de la pensée du conducteur. Par exemple, lorsque le niveau Nv estimé est élevé, par exemple égal à 3 ou 4 sur l'échelle de 1 à 4 utilisée, la zone de vision périphérique correspondant à des portions latérales du cône de vision, est diminuée par rapport à une zone de vision périphérique par défaut c'est-à-dire sans tenir compte d'un vagabondage de la pensée du conducteur, et inversement. Le niveau Nv estimé de vagabondage de la pensée du conducteur peut alternativement être représenté par une valeur réelle par exemple comprise entre 0 et 1, ou comprise dans un autre intervalle de valeurs, ou bien un entier naturel codé sur une échelle plus petite ou plus grande que dans ce mode de réalisation de l'invention, par exemple sur une échelle de 1 à 10.

Le niveau de risque global C lié à la compréhension par le conducteur de l'environnement de conduite, fourni par les moyens d'analyse 16, dépend de la présence des objets Oj associés aux risques Rj dans le cône de vision du conducteur, éventuellement adapté en fonction du niveau Nv estimé de vagabondage de la pensée du conducteur, et des probabilités associées à ces risques Rj. En l'absence de risques Rj, le niveau de risque global C lié à la compréhension par le conducteur de l'environnement de conduite est minimal. Le niveau de risque global C lié à la compréhension par le conducteur de l'environnement de conduite augmente d'autant plus lorsqu'un risque Rj est aux limites ou en dehors du cône de vision du conducteur et lorsque la probabilité associée à ce risque Rj est élevée, par exemple supérieure à un seuil prédéterminé.

Le système de stimulation contextualisée 1 comporte enfin, dans ce mode de réalisation de l'invention, un module de gestion 18 d'alertes, apte à recevoir le niveau Nv de vagabondage de la pensée du conducteur, estimé par le module d'estimation 12, le niveau de risque global C lié à la compréhension par le conducteur de l'environnement de conduite, fourni par les moyens d'analyse 16, et le niveau de complexité D de conduite, fourni par le module de modélisation 10.

Le module de gestion 18 d'alertes est connecté ici à une ou plusieurs interfaces homme-machine 20, aptes à générer des alertes destinées au conducteur. Les interfaces homme-machine comportent par exemple un écran d'affichage, un haut-parleur, et un dispositif haptique apte à faire vibrer le volant du conducteur.

On décrit maintenant en relation avec la [Fig.2], les étapes du procédé de stimulation contextualisée 100 de l'attention du conducteur du véhicule, mis en œuvre par le système de stimulation contextualisée 1 de l'attention, dans ce mode de réalisation de l'invention.

Le procédé de stimulation contextualisée 100 comporte une première étape 102 mise en œuvre par le module de modélisation 10, de façon continue au fur et à mesure que celui-ci reçoit des données des différentes caméras, radars et LiDARs du véhicule. Cette première étape 102 est la modélisation de l'environnement de conduite {Ei}, la fourniture d'au moins une donnée de cet environnement de conduite {Ei} au module d'estimation 12, la fourniture des potentiels obstacles {Oj} dans cet environnement de conduite au module de détection 14 de risque et aux moyens d'analyse 16, la détermination du niveau de complexité D de l'environnement de conduite {Ei} et la fourniture de ce niveau de complexité D au module de gestion 18 d'alertes. Le niveau de complexité D est par exemple une valeur réelle comprise entre 0 et 1 ou comprise dans un autre intervalle, ou bien est un entier naturel sur une échelle de 0 à 3, ou sur une échelle plus petite ou plus grande.

Cette première étape 102 est suivie d'une deuxième étape 104 du procédé de stimulation contextualisée 100, mise en œuvre par le module d'estimation 12, et qui est l'estimation du niveau Nv de vagabondage de la pensée du conducteur pour la période de conduite courante, cette étape d'estimation étant répétée périodiquement à chaque nouvelle période de conduite, fixée par exemple à trente secondes.

Cette deuxième étape 104 comporte une première sous-étape 1041 de réception :

- de données physiologiques issues de capteurs physiologiques, par exemple une ceinture cardiaque ou une montre connectée portées par le conducteur, et un oculomètre sous forme par exemple d'une caméra fixée au pare-brise du véhicule,
- de données issues du bus informatique, telles que par exemple la demande de couple moteur déduite de l'appui sur la pédale d'accélération par le conducteur, et l'angle au volant,
- de données fournies par le module de modélisation 10, permettant au module d'estimation 12 de déterminer un contexte de conduite, par exemple autoroutier avec un ciel dégagé.

Lors de cette première sous-étape de réception 1041, le module d'estimation 12 forme avec les données reçues, un vecteur multidimensionnel courant dans le même espace multidimensionnel que les vecteurs multidimensionnels de référence utilisés pendant la phase d'apprentissage pour former des groupes de vecteurs multidimensionnels de référence.

Suite à la première sous-étape 1041 de réception, la deuxième étape 104 d'estimation du procédé de détection 100 comporte une deuxième sous-étape 1042 de normalisation, optionnelle. Dans ce cas, les vecteurs multidimensionnels de référence de chaque groupe de vecteurs multidimensionnels de référence sont également normalisés, de la même façon, une seule fois lors de la phase d'apprentissage.

Cette normalisation utilise par exemple la formule suivante, qui permet de normaliser toutes les coordonnées entre 0 et 1 :

$$\frac{x_i - \min(x)}{\max(x) - \min(x)}$$ avec $x_i$ une coordonnée du vecteur multidimensionnel courant ou du vecteur multidimensionnel de référence considéré, correspondant à un type de donnée codé sur une dimension, $\min(x)$ la valeur minimale des coordonnées des vecteurs multidimensionnels de référence relatives à cette dimension, et $\max(x)$ la valeur maximale des coordonnées des vecteurs multidimensionnels de référence relatives à cette dimension.

On peut bien sûr choisir une autre méthode de normalisation, ou un autre intervalle de valeurs.

Dans la suite, le vecteur multidimensionnel courant et de référence considérés sont normalisés c'est-à-dire qu'on travaille sur des coordonnées comprises entre 0 et 1.

Puis, dans une troisième sous-étape 1043 de la deuxième étape 104 d'estimation, on quantifie l'état de vagabondage de la pensée du conducteur. Pour cela, le module d'estimation 12 calcule les distances entre le vecteur multidimensionnel courant et chacun des groupes de vecteurs multidimensionnels de référence issus de la phase d'apprentissage. Plus précisément, chaque distance est calculée comme la distance euclidienne entre le vecteur multidimensionnel courant et le centre gravité du groupe de vecteurs multidimensionnels de référence pour lequel la distance entre le vecteur multidimensionnel courant et ce groupe est calculée.

La distance la plus petite est calculée entre le vecteur multidimensionnel courant et le groupe auquel le vecteur multidimensionnel courant est attribué. Le module d'estimation 12 fournit un niveau Nv estimé de vagabondage de la pensée du conducteur correspondant au niveau de vagabondage de la pensée associé au groupe de vecteurs multidimensionnels de référence le plus proche du vecteur multidimensionnel courant.

Il est à noter que lorsqu'un des capteurs physiologiques n'est pas fiable, la dimension correspondant à ce capteur n'est par exemple pas prise en compte pour le calcul des distances entre le vecteur multidimensionnel courant et chacun des groupes issus de la phase d'apprentissage, ce qui permet d'obtenir un niveau de vagabondage de la pensée du conducteur, indépendamment de la remontée de ce capteur physiologique.

De manière avantageuse, il est possible d'affecter des facteurs de pondération à la mesure de distance, pour donner des poids différents aux différentes entrées considérées. Par exemple, la littérature scientifique a montré que les environnements de conduite monotones et peu sollicitants (type autoroute) facilitent l'émergence du vagabondage de la pensée. Il est alors possible de pondérer plus fortement les variables physiologiques et comportementales dans ces contextes routiers. De ce fait, un niveau élevé de vagabondage de la pensée pourra être atteint plus rapidement. Les poids du calcul de distance peuvent ainsi être adaptés en fonction du contexte.

Suite à la deuxième étape 104 d'estimation du niveau Nv de vagabondage de la pensée du conducteur, le module d'estimation 12 délivre au module de gestion 18 d'alertes, le niveau Nv estimé de vagabondage de la pensée du conducteur, ainsi que la durée d pendant laquelle le conducteur se trouve dans un état de vagabondage de la pensée, et le niveau de fiabilité de l'estimation effectuée.

En parallèle de la deuxième étape 104 d'estimation du niveau Nv de vagabondage de la pensée du conducteur, le procédé de stimulation contextualisée 100 comporte une étape 106 mise en œuvre de façon continue par le module de détection 14 de risque, au fur et à mesure que celui-ci reçoit de potentiels obstacles {Oj} provenant du module de modélisation 10. Cette étape 106 est l'identification d'un ou plusieurs risques Rj liés à l'environnement de conduite modélisé, en fonction des potentiels obstacles Oj. Les risques Rj ainsi identifiés sont envoyés, dans cette étape 106, aux moyens d'analyse 16.

L'étape 106 de détection de risque est suivie d'une étape 108, mise en œuvre de façon continue par les moyens d'analyse 16, au fur et à mesure qu'ils reçoivent du module de modélisation 10, les potentiels obstacles Oj, du module de détection 14 de risque, le ou les risques Rj identifiés, et qu'ils reçoivent du module d'estimation 12, le niveau Nv estimé de vagabondage de la pensée du conducteur. Cette étape, mise en œuvre par les moyens d'analyse 16, comprend la détermination du champ d'exploration visuelle du conducteur et la fourniture d'un niveau de risque global C lié à la compréhension par le conducteur de l'environnement de conduite, à partir du ou des risques Rj identifiés par le module de détection 14, des potentiels obstacles Oj correspondants, et du champ d'exploration visuelle déterminé. Comme expliqué précédemment, le champ d'exploration visuelle est représenté par un cône de vision dont le sommet est situé au niveau des yeux du conducteur, et qui balaie une scène de conduite par les mouvements du regard ou de la tête du conducteur. La forme de la base de ce cône peut être ajustée en fonction du niveau Nv estimé de vagabondage de la pensée du conducteur. Ce champ d'exploration visuelle éventuellement ajusté permet d'estimer un niveau de risque global C lié à la compréhension par le conducteur de l'environnement de conduite, sous forme par exemple d'une probabilité comprise entre 0 et 1.

Les étapes 104 d'estimation du niveau de vagabondage de la pensée du conducteur, et 108 de détermination du champ d'exploration visuelle du conducteur et de fourniture du niveau de risque global C lié à la compréhension par le conducteur de l'environnement de conduite, sont suivies d'une étape 110 de détermination d'alertes à générer, mise en œuvre par le module de gestion 18 d'alertes.

Lors de cette étape 110 de détermination d'alertes à générer, le module de gestion 18 d'alertes reçoit, en provenance du module d'estimation 12, le niveau Nv estimé de vagabondage de la pensée du conducteur, et la durée d pendant laquelle le conducteur se trouve dans cet état. Le module de gestion 18 d'alertes reçoit également dans cette étape 110, en provenance des moyens d'analyse 16, le niveau de risque global C lié à la compréhension par le conducteur de l'environnement de conduite, et en provenance du module de modélisation 10, le niveau de complexité D de l'environnement de conduite.

Dans cette étape 110, en fonction des données reçues, le module de gestion 18 d'alertes est en mesure de déclencher une alerte au conducteur d'un état élevé de vagabondage de la pensée, ou une alerte d'un risque lié à un manque de vigilance, en utilisant la ou les interfaces homme-machine 20.

Notamment dans cette étape 110, lorsque le niveau de risque global C lié à la compréhension par le conducteur de l'environnement de conduite est strictement supérieur à un niveau de risque prédéterminé, alors le module de gestion 18 d'alertes alerte 112 le conducteur d'un manque de vigilance de sa part, et notamment du fait qu'il n'a pas conscience d'un risque lié à l'environnement de conduite, en utilisant une ou plusieurs interfaces homme-machine 20. Il fait par exemple afficher un message sur un écran du véhicule, et/ou vibrer le volant en utilisant un dispositif haptique et/ou émettre un message sonore en utilisant un haut-parleur. Le message visuel, haptique ou sonore est propre à l'indication d'un manque de vigilance de la part du conducteur. Le niveau de risque prédéterminé est par exemple égal à 0,5 lorsque le niveau de risque global C est codé entre 0 et 1.

Cette alerte au conducteur d'un risque lié à un manque de vigilance de sa part est éventuellement modulée en fonction du niveau de risque global C fourni par les moyens d'analyse 16. Par exemple, son déclenchement peut être anticipé ou d'intensité plus élevée si le conducteur a un très faible niveau de conscience de la situation de conduite.

Suite à cette alerte 112, lorsque le conducteur ne réagit pas à l'urgence de la situation, le système avancé d'aide à la conduite implémentant le système de stimulation contextualisée 1 de l'attention, agit éventuellement sur le véhicule en utilisant un dispositif de freinage d'urgence, ou un dispositif de contrôle de trajectoire.

L'étape 110 comprend également la possibilité d'alerter 114 le conducteur qu'il se trouve dans un état élevé de vagabondage de pensée. Cette alerte 114 est inhibée lorsque l'alerte 112 au conducteur d'un risque lié à un manque de vigilance de sa part est activée.

Cela permet d'éviter de sur-solliciter le conducteur, ce qui pourrait générer un rejet de la fonction, et d'éviter que l'alerte de vagabondage de la pensée ne vienne réduire l'attention que le conducteur pourrait porter à d'autres alertes plus prioritaires, en particulier l'alerte de risques.

L'alerte 114 spécifique au cas du vagabondage de la pensée est une alerte contextuelle, c'est-à-dire qui dépend de la situation dans laquelle se trouve le conducteur, en particulier du niveau de complexité D de la situation de conduite. Cette alerte n'est pas systématiquement envoyée au conducteur lorsqu'il se trouve dans un cas de vagabondage de la pensée, cela peut dépendre :

- du niveau de complexité D de l'environnement de conduite,
- du niveau de vagabondage de la pensée, et

- de l'historique de déclenchement des alertes précédentes.

En effet, pour augmenter l'acceptabilité d'une telle alerte, il est nécessaire de contrôler la fréquence de son déclenchement. Par exemple, nous pouvons formuler la règle suivante : si une précédente alerte a été activée, on peut définir une durée T correspondant au délai minimum requis avant la réémission d'une nouvelle alerte. Alors le système ne renverra pas de nouvelle alerte au conducteur de nouveau en état vagabondage de la pensée avant la durée T.

Eventuellement, d'autres critères peuvent être utilisés pour décider d'afficher ou non l'alerte spécifique au cas du vagabondage de la pensée, par exemple la durée d depuis laquelle le conducteur se trouve dans l'état de vagabondage de la pensée, ou le nombre d'alertes déclenchées sur le trajet du conducteur.

L'étape 110 de détermination d'alertes à générer comprend la comparaison entre le niveau Nv estimé de vagabondage de la pensée et un seuil de vagabondage prédéterminé, par exemple égal à 2, ou à 2,5.

Lorsque le niveau Nv estimé de vagabondage de la pensée est strictement supérieur au seuil de vagabondage prédéterminé et que le niveau de complexité D de l'environnement de conduite est supérieur à un niveau de complexité prédéterminé, alors le module de gestion 18 d'alertes alerte 114 le conducteur pour le rappeler à son activité de conduite.

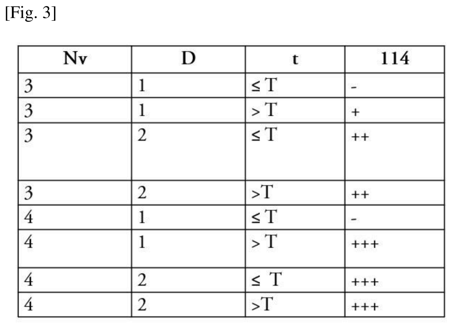

L'alerte 114 peut également être modulée en fonction du niveau de complexité D de l'environnement de conduite et de la durée t depuis la dernière levée d'alerte. Un exemple de tableau de décision utilisable par le module de gestion 18 d'alertes pour déterminer cette alerte, est illustré [Fig.3].

Dans ce tableau, le niveau Nv de vagabondage de la pensée est noté sur 4, et le seuil de vagabondage prédéterminé est de 2, c'est-à-dire qu'il n'y a pas d'alerte pour état élevé de vagabondage de pensée lorsque le niveau Nv estimé de vagabondage de la pensée vaut 1 ou 2. De plus, dans ce tableau, le niveau de complexité D de l'environnement de conduite vaut 1 ou 2, et le niveau de complexité prédéterminé est égal 1. Un niveau de complexité D de 1 est considéré comme un niveau de complexité faible, et un niveau de complexité D de 2 est considéré comme un niveau de complexité élevé.

Selon ce tableau de décision, lorsque le niveau Nv estimé de vagabondage de la pensée est de 3, et le niveau de complexité D de l'environnement de conduite est faible, le

module de gestion 18 d'alertes n'alerte 114 le conducteur de son état élevé de vagabondage de la pensée que si la durée t depuis la dernière alerte est supérieure à la durée T, par exemple égale à 2 minutes. Dans le cas contraire, c'est-à-dire si la durée t est inférieure ou égale à la durée T, et bien que le niveau Nv estimé de vagabondage de la pensée soit de 3, le module de gestion 18 d'alertes inhibe 120 (signe « - » à la dernière colonne « 114 ») le déclenchement de l'alerte au conducteur de son état élevé de vagabondage de la pensée.

Par contre, dans le cas où le niveau de complexité D de l'environnement de conduite est élevé et où le niveau Nv estimé de vagabondage de la pensée est de 3 ou 4, le module de gestion 18 d'alertes alerte 114 systématiquement le conducteur de son état élevé de vagabondage de la pensée, indépendamment de la durée t depuis la dernière alerte (les signes « + » à la dernière colonne « 114 » sont d'autant plus nombreux que l'intensité de l'alerte 114 est importante).

Bien sûr le tableau de la [Fig.3] n'est qu'un exemple illustratif de la dépendance de l'alerte 114 du conducteur d'un état élevé de vagabondage de la pensée, au niveau Nv estimé de vagabondage de la pensée, au niveau de complexité D de l'environnement de conduite et à la durée t depuis la dernière levée d'une alerte. Bien d'autres réalisations sont possibles.

L'alerte 114 pour état élevé de vagabondage de la pensée peut être modulée en fonction de la valeur du niveau Nv estimé de vagabondage de la pensée, du nombre d'alertes déjà soulevées sur le trajet du conducteur, de la durée d passée en état de vagabondage de la pensée, du temps passé au volant, etc, par exemple en utilisant des couleurs, sons et niveaux sonores différents.

Selon un mode de réalisation de l'invention, suite à l'étape d'alerte 114 du conducteur d'un état élevé de vagabondage de la pensée, le module de gestion 18 d'alertes vérifie 116 que le conducteur réagit à l'alerte 114. Cette étape 116 de vérification a pour but d'inhiber l'alerte 114 sans attendre la prochaine itération du procédé, lorsque le conducteur réagit suffisamment vite. Dans cette étape 116, une réaction du conducteur est par exemple détectée :

- par un changement de dynamique dans l'activité des pédales, du volant, ou d'autres commandes telles que les clignotants, et/ou
- par un changement dans la dynamique d'exploration visuelle du regard du conducteur, et/ou
- lorsque le conducteur répond à un avatar utilisé pour parler au conducteur, dans le cas où l'alerte 114 utilise un tel avatar.

Lorsqu'une telle réaction est détectée, lors de cette étape 116 de vérification, alors le module de gestion 18 d'alertes inhibe 120 l'alerte au conducteur. Au contraire, lorsqu'aucune réaction du conducteur n'est détectée lors de cette étape 116 de vérification, alors le module de gestion 18 d'alertes intensifie 118 l'alerte, par exemple en intensifiant le clignotement de diodes électroluminescentes, de bips sonores, ou en faisant parler plus fort un avatar s'adressant au conducteur.

Ce mode de réalisation de l'invention est facilement implémentable dans le véhicule, permet un calcul rapide et en temps réel de l'état de vagabondage de la pensée du conducteur, et une personnalisation d'un système avancé d'aide à la conduite intégrant l'invention, ce qui facilite l'acceptabilité des alertes du système de stimulation contextualisée selon l'invention. Il permet de plus une évaluation de l'efficacité des alertes effectuées, grâce à la vérification des réactions du conducteur, et donc une adaptation du module de gestion 18 d'alertes en fonction de cette évaluation.

Il est à noter par ailleurs que dans ce mode de réalisation de l'invention, l'étape d'alerte au conducteur d'un risque lié à un manque de vigilance est mise en œuvre lorsque le niveau de risque global est strictement supérieur au niveau de risque prédéterminé, mais en variante, l'étape d'alerte au conducteur d'un risque lié à un manque de vigilance est mise en œuvre lorsque le niveau de risque global est supérieur ou égal à un niveau de risque prédéterminé. Dans cette variante, lorsque le niveau de risque lié à un manque de vigilance est strictement inférieur au niveau de risque prédéterminé, l'alerte au conducteur d'un état élevé de vagabondage de la pensée est par exemple déclenchée systématiquement lorsque le niveau estimé de vagabondage de la pensée est supérieur ou égal à un seuil de vagabondage prédéterminé d'état de vagabondage de la pensée et lorsque le niveau de complexité de conduite est supérieur ou égal à un niveau de complexité prédéterminé. Autrement dit les conditions d'inégalité strictes peuvent être remplacées par des conditions d'inégalité non strictes sans changer la nature de l'invention.

Selon un mode de réalisation particulier, le niveau Nv estimé de vagabondage de la pensée du conducteur est utilisé pour moduler (retarder l'apparition ou à l'inverse faire apparaître de manière plus anticipée ou plus marquée) des alertes ou indications produites par d'autres fonctions/systèmes du véhicule, par exemple en retardant l'apparition d'une alerte ou d'une indication liée à la présence d'un obstacle lointain lorsque le conducteur a un niveau bas de vagabondage de la pensée.

Bien sûr, l'invention n'est pas limitée aux exemples qui viennent d'être décrits et de nombreux aménagements peuvent être apportés à ces exemples sans sortir du cadre de l'invention. Notamment les caractéristiques des différentes variantes de réalisation peuvent être combinées pour réaliser l'invention, dans la mesure où ces variantes ne sont pas incompatibles entre elles.

**Revendications**

1. Système de stimulation contextualisée (1) de l'attention d'un conducteur de véhicule, comportant :

   - au moins une interface homme-machine (20),
   - un module d'estimation (12) d'un niveau (Nv) de vagabondage de la pensée du conducteur,
   - un module de modélisation (10) d'un environnement de conduite du véhicule, apte à fournir un niveau de complexité (D) de l'environnement de conduite modélisé,
   - un module de détection (14) de risque lié à l'environnement de conduite modélisé, apte à identifier un ou plusieurs risques (Rj) liés à l'environnement de conduite,
- des moyens d'analyse (16) aptes à déterminer un champ d'exploration visuelle du conducteur, et à fournir un niveau de risque global (C) lié à la compréhension par le conducteur de l'environnement de conduite, à partir du ou des risques (Rj) identifiés par le module de détection (14) et du champ d'exploration visuelle déterminé,

le système de stimulation contextualisée (1) étant **caractérisé en ce qu'**il est configuré pour alerter le conducteur qu'il est dans un état élevé de vagabondage de la pensée, en utilisant l'au moins une interface homme-machine (20), lorsque le niveau (Nv) estimé de vagabondage de la pensée du conducteur est supérieur à un seuil de vagabondage prédéterminé et lorsque le niveau de complexité (D) de l'environnement de conduite est supérieur à un niveau de complexité prédéterminé, et pour alerter le conducteur d'un risque lié à un manque de vigilance, en utilisant l'au moins une interface homme-machine (20), lorsque le niveau de risque global (C) lié à la compréhension par le conducteur de l'environnement de conduite est supérieur à un niveau de risque prédéterminé.

2. Système de stimulation contextualisée (1) de l'attention selon la revendication 1, comportant des moyens d'inhibition de l'alerte liée à un état élevé de vagabondage de la pensée du conducteur dès qu'une alerte d'un risque lié à un manque de vigilance est déclenchée par le système de stimulation contextualisée (1).

3. Système de stimulation contextualisée (1) de l'attention selon la revendication 1 ou 2, dans lequel les moyens d'analyse (16) aptes à fournir un niveau de risque global (C) lié à la compréhension par le conducteur de l'environnement de conduite, sont configurés pour prendre en compte le niveau (Nv) de vagabondage de la pensée estimé par le module d'estimation (12).

4. Système de stimulation contextualisée (1) de l'attention selon la revendication 3, dans lequel les moyens d'analyse (16) sont aptes à déterminer un champ d'exploration visuelle en fonction du regard du conducteur, et à ajuster le champ d'exploration visuelle en fonction du niveau (Nv) estimé de vagabondage de la pensée pour calculer le niveau de risque global (C) lié à la compréhension par le conducteur de l'environnement de conduite.

5. Procédé de stimulation contextualisée (100) de l'attention d'un conducteur de véhicule, utilisant au moins une interface homme-machine (20), un module d'estimation (12) d'un niveau (Nv) de vagabondage de la pensée du conducteur, un module de modélisation (10) d'un environnement de conduite du véhicule, apte à fournir un niveau de complexité (D) de l'environnement de conduite modélisé, un module de détection (14) de risque lié à l'environnement de conduite modélisé, apte à identifier un ou plusieurs risques (Rj) liés à l'environnement de conduite, des moyens d'analyse (16) aptes à déterminer un champ d'exploration visuelle du conducteur et à fournir un niveau de risque global (C) lié à la compréhension par le conducteur de l'environnement de conduite à partir du ou des risques (Rj) identifiés par le module de détection (14) et du champ d'exploration visuelle déterminé, le procédé de stimulation contextualisée (100) étant **caractérisé en ce qu'**il comporte des étapes de :

- modélisation (102) de l'environnement de conduite par le module de modélisation (10), et fourniture du niveau de complexité (D) de l'environnement de conduite modélisé par le module de modélisation (10),
- estimation (104) du niveau (Nv) de vagabondage de la pensée par le module d'estimation (12),
- identification (106) d'un ou plusieurs risques liés à l'environnement de conduite modélisé par le module de détection (14),
- détermination (108) par les moyens d'analyse (16) du champ d'exploration visuelle du conducteur et fourniture d'un niveau de risque global (C) lié à la compréhension par le conducteur de l'environnement de conduite, à partir du ou des risques (Rj) identifiés par le module de détection (14) et du champ d'exploration visuelle déterminé, par les moyens d'analyse (16),
- alerte (114) au conducteur d'un état élevé de vagabondage de la pensée, en utilisant l'au moins une interface homme-machine (20), lorsque le niveau (Nv) estimé de vagabondage de la pensée est supérieur à un seuil de vagabondage prédéterminé et lorsque le niveau de complexité (D) de l'environnement de conduite est supérieur à un niveau de complexité prédéterminé, ou
- alerte (112) au conducteur d'un risque lié à un manque de vigilance, en utilisant l'au moins une interface homme-machine (20), lorsque le niveau de risque global (C) lié à la compréhension par le conducteur de l'environnement de conduite est supérieur à un niveau de risque prédéterminé.

6. Procédé de stimulation contextualisée (100) de l'attention selon la revendication 5, dans lequel l'étape d'alerte (114) au conducteur, relative à un état élevé de vagabondage de la pensée est déclenchée de manière conditionnée à un historique d'alertes précédemment effectuées.

7. Procédé de stimulation contextualisée (100) de l'attention selon la revendication 5 ou 6, dans lequel l'alerte (114) au conducteur d'un état élevé de vagabondage de la pensée est adaptée au niveau (Nv) estimé de vagabondage de la pensée, et/ou à un historique d'alertes précédentes d'un état élevé de vagabondage de la pensée, et/ou au niveau de complexité (D) de l'environnement de conduite.

8. Procédé de stimulation contextualisée (100) de l'attention selon l'une quelconque des revendications 5 à 7, dans lequel l'alerte (114) au conducteur d'un état élevé de vagabondage de la pensée ou d'un risque lié à un manque de vigilance, est suivie d'une étape de vérification (116) d'une réaction du conducteur à l'alerte (114), et d'une étape d'intensification (118) de l'alerte (114) en l'absence de réaction du conducteur, ou d'inhibition (120) de l'alerte (114) lorsqu'une réaction du conducteur est confirmée.

9. Procédé de stimulation contextualisée (100) de l'attention selon l'une quelconque des revendications 5 à 8, dans lequel l'étape d'estimation (104) d'un niveau de vagabondage de la pensée par le module d'estimation (12) comporte d'une part une sous-étape de réception (1041) de données représentatives de mesures physiologiques du conducteur, de données représentatives de commandes du conducteur, et d'au moins une donnée représentative d'un environnement de conduite, et d'autre part une sous-étape de quantification (1043) d'un état de vagabondage de la pensée du conducteur en fonction des données reçues.

10. Procédé de stimulation contextualisée (100) de l'attention selon la revendication 9, dans lequel la sous-étape de quantification (1043) comporte une mesure de distances entre un vecteur multidimensionnel représentatif des données reçues et des groupes de vecteurs multidimensionnels de référence associés à des niveaux de vagabondage de la pensée, le niveau de vagabondage de la pensée estimé étant celui du groupe de vecteurs multidimensionnels de référence le plus proche du vecteur multidimensionnel représentatif des données reçues.

[Fig. 1]

[Fig. 2]

[Fig. 3]

| Nv | D | t | 114 |
|---|---|---|---|
| 3 | 1 | ≤ T | - |
| 3 | 1 | > T | + |
| 3 | 2 | ≤ T | ++ |
| 3 | 2 | >T | ++ |
| 4 | 1 | ≤ T | - |
| 4 | 1 | > T | +++ |
| 4 | 2 | ≤ T | +++ |
| 4 | 2 | >T | +++ |

| | Europäisches Patentamt<br>European Patent Office<br>Office européen des brevets | **RAPPORT DE RECHERCHE EUROPEENNE** | Numéro de la demande<br>**EP 25 22 2426** |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | HELD MORITZ ET AL: "Preventing mind-wandering during driving: Predictions on potential interventions using a cognitive model",<br>INTERNATIONAL JOURNAL OF HUMAN-COMPUTER STUDIES, ELSEVIER, AMSTERDAM, NL,<br>vol. 181, 11 octobre 2023 (2023-10-11),<br>XP087434065,<br>ISSN: 1071-5819, DOI:<br>10.1016/J.IJHCS.2023.103164<br>[extrait le 2023-10-11]<br>* le document en entier *<br>----- | 1-10 | INV.<br>B60W40/08<br>B60W50/14 |
| A | US 2023/347912 A1 (KARVE OMKAR [US])<br>2 novembre 2023 (2023-11-02)<br>* le document en entier *<br>----- | 1-10 | |
| A | US 2024/400114 A1 (VIVIANO RAYMOND P [US])<br>5 décembre 2024 (2024-12-05)<br>* le document en entier *<br>----- | 1-10 | |
| A | US 2022/032942 A1 (TAKEI TAKUMI [JP])<br>3 février 2022 (2022-02-03)<br>* le document en entier *<br>----- | 1-10 | DOMAINES TECHNIQUES RECHERCHES (IPC)<br><br>B60W |

Le présent rapport a été établi pour toutes les revendications

| Lieu de la recherche | Date d'achèvement de la recherche | Examinateur |
|---|---|---|
| Munich | 18 décembre 2025 | Granier, Frédéric |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 22 2426

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-12-2025

| Document brevet cité<br>au rapport de recherche | Date de<br>publication | Membre(s) de la<br>famille de brevet(s) | Date de<br>publication |
|---|---|---|---|
| US 2023347912 A1 | 02-11-2023 | CN 117022310 A<br>DE 102022116636 A1<br>US 2023347912 A1 | 10-11-2023<br>02-11-2023<br>02-11-2023 |
| US 2024400114 A1 | 05-12-2024 | AUCUN | |
| US 2022032942 A1 | 03-02-2022 | CN 112823383 A<br>DE 112018008075 T5<br>JP WO2020079755 A1<br>US 2022032942 A1<br>WO 2020079755 A1 | 18-05-2021<br>08-07-2021<br>15-02-2021<br>03-02-2022<br>23-04-2020 |

EPO FORM P0460

Pour tout renseignement concernant cette annexe : voir Journal Officiel de l'Office européen des brevets, No.12/82